# EUROPÄISCHE PATENTSCHRIFT

(11) **EP 2 130 805 B1**
(45) Veröffentlichungstag und Bekanntmachung des Hinweises auf die Patenterteilung: **18.08.2010**
(21) Anmeldenummer: 09012064.3
(22) Anmeldetag: 11.01.2003
(51) Int. Cl.: C04B 35/589, F16C 33/04, F16C 33/30, C04B 35/571

(54) **Verfahren zur Herstellung keramischer Lagerbauteile**
Method for producing ceramic bearing components
Procédé de fabrication de composants de palier en céramique

(30) Priorität: 25.01.2002 DE 10203473
(43) Veröffentlichungstag der Anmeldung: 09.12.2009
(62) Teilanmeldung aus: 03000481.6
(73) Patentinhaber: AB SKF, 415 50 Göteborg (SE)
(72) Erfinder: Gegner, Jürgen, 90765 Fürth (DE)
(74) Vertreter: Kohl, Thomas

(56) Entgegenhaltungen:
- EP-A- 0 366 443
- EP-A- 1 310 469
- DE-A1- 2 803 658
- DE-A1- 4 318 974
- DE-A1- 19 855 811

## Beschreibung

Die Erfindung betrifft ein Verfahren zur Herstellung keramischer Lagerbauteile.

Sowohl bei Gleitlager- als auch bei Wälzlageranwendungen ist es bereits bekannt, Lagerbauteile aus Keramik einzusetzen. Bei den Lagerbauteilen kann es sich beispielsweise um Wälzkörper oder um Lagerringe eines keramischen Wälzlagers eines Hybrid-Wälzlagers (Ringe aus Wälzlagerstahl) oder eines Gleitlagers handeln. Nach dem Stand der Technik werden solche Lagerbauteile aus gesinterter und heißgepresster Keramik hergestellt, u. a. wegen der guten Ermüdungs- und Abbriebbeständigkeit (hoher Verschleißwiderstand, geringe Verschleißrate) bevorzugt aus Siliziumnitrid. Verbreitet werden heißgepresstes (HPSN), heißisostatisch gepresstes (HIPSN) und direkt gesintertes Siliziumnitrid (SSN) verwendet. Daneben können keramische Lagerbauteile auch beispielsweise aus Zirkonoxid, Aluminiumoxid und Siliziumcarbid gefertigt werden.

Die EP 0 366 443 B1 offenbart keramische Lagerbausteine und ein Verfahren zur Herstellung derartiger Lagerbausteine. Die Lagerbausteine zeichnen sich dadurch aus, dass sie aus einem keramischen Material gebildet werden, das einen Gehalt an metallischen Bestandteilen in einer Menge von 3500 ppm oder weniger hat und das mehrere der Elemente Eisen, Nickel, Chrom und Wolfram enthält. Bei dem offenbarten Verfahren für die Herstellung eines keramischen Wälzlagerbausteins wird keramisches Rohmaterialpulver in eine Schlemmenform umgewandelt. Die Schlemme wird granuliert, zu einer gewünschten Gestalt geformt und gesintert. Während des Verfahrens werden metallische Bestandteile auf einen Restwert von 3500 ppm oder weniger reduziert.

Obwohl sich keramische Lagerbauteile bereits vielfach bewährt haben, weil sie auch unter extremen Bedingungen, wie beispielsweise hohe Temperaturen oder Schmiermittelverlust eine vergleichsweise hohe Lebensdauer aufweisen, beschränkt sich der Einsatz von keramischen Lagerbauteilen bislang hauptsächlich auf den Bereich von Spezialanwendungen. Dies ist darin begründet, dass die Herstellungskosten der Lagerbauteile bei Anwendung bekannter Herstellungsverfahren deutlich über den Herstellungskosten für vergleichbare Lagerbauteile aus Stahl liegen.

Der Erfindung liegt die Aufgabe zugrunde, ein Verfahren zur Herstellung keramischer Lagerbauteile anzugeben, das kostengünstig ist und dennoch die im Bereich der Lagertechnik bestehenden hohen Qualitätsanforderungen erfüllt.

Diese Aufgabe wird durch ein Verfahren mit den Verfahrensschritten gemäß Anspruch 1 erfüllt.

Beim erfindungsgemäßen Verfahren wird zur Herstellung keramischer Lagerbauteile ein Stoffgemisch, aus einer metallorganischen Verbindung als präkeramische Vorstufe und aus Silizium in Form einer Legierung, die kein Metallsilizid ist, als chemisch reaktiven Füllstoff hergestellt und einer Reaktionspyrolyse unterzogen. Damit können Lagerbauteile insbesondere auf der Basis von Siliziumnitrid und Siliziumcarbid hergestellt werden. Aus Anspruch 1 ist ausgenommen, dass der chemisch reaktive Füllstoff ein Metallsilizid ist, da dies aus der nicht vorveröffentlichten EP 1 310 469 A2 bekannt ist.

Bevorzugt werden Siliziumnitrid-Basiskeramiken gefertigt. Das Volumenverhältnis von metallorganischer Verbindung zu Füllstoff liegt typischerweise im Bereich um 50 %, eher verschoben zugunsten der organischen Vorstufe. Bei der Reaktionspyrolyse findet eine thermische Umsetzung (Thermolyse) des Polymers in ein keramisches Material statt.

Diese Vorgehensweise hat den Vorteil, dass der Herstellungsprozess verglichen mit bei der Herstellung keramischer Lagerbauteile herkömmlicher Weise eingesetzten Sinter- und Heißpressverfahren schneller abläuft und auch wegen merklich niedrigerer Temperaturen verglichen mit typischen Sintertemperaturen für Siliziumnitrid von 1700 °C bis 2000 °C einen deutlich geringeren Energieeinsatz sowie eine wesentlich unempfindlichere und daher entschieden weniger aufwendige Prozessführung erfordert. Zudem sind die verwendeten Ausgangsstoffe vergleichsweise kostengünstig. Ein weiterer Vorteil besteht darin, dass es bei geeigneten Prozessbedingungen während der pyrolytischen Keramisierung kaum zu einer Schwindung kommt, wobei allerdings, speziell bei einfachen Formkörpern, wie beispielsweise aus Stangen oder Stäben hergestellte Rollen oder Kugeln für Wälzlager, auch kontrolliert größere Volumenänderungen zugelassen werden können.

Das Stoffgemisch kann eine vernetzende metallorganische, insbesondere siliziumorganische Verbindung wie beispielsweise ein Silicon oder Polysiloxan als präkeramische Vorstufe enthalten. Besonders gut eignen sich Siliconharze oder Polysilsesquioxane u. a. wegen der an Luft durchführbaren Vorverarbeitung (Feuchtigkeitsunempfindlichkeit, Hydrolysestabilität) und sind zudem dank entsprechender Verfügbarkeit vergleichsweise kostengünstig erhältlich. Sie sind in fester und flüssiger Form mit unterschiedlicher Viskosität erhältlich und erlauben über ihr breites Zusammensetzungsspektrum neben dem Siliziumgehalt insbesondere die Auswahl verschiedener Kohlenstoff- und Sauerstoffanteile.

Es ist beispielsweise an den Einsatz geeigneter industrieller Rückstände u. a. aus der Stahlindustrie (erzeugend und verarbeitend), der Silizium-, Wafer- und Halbleiterindustrie zu denken, gegebenenfalls nach entsprechender Aufbereitung. Dabei ist zu beachten, dass Legierungs- und Begleitelemente des Stahls, wie z. B. Chrom, Molybdän, Aluminium und auch Kohlenstoff, sowie eventuell beigemischte Schleifmittelrückstände, speziell Siliziumcarbid, für die weitere Verwendung im Rahmen des erfindungsgemäßen Verfahrens günstige Füllstoffwirkung (chemisch reaktiv oder inert) zeigen und organische Restbestandteile thermisch mitumgesetzt werden. Der chemisch reaktive Füllstoff kann in Pulverform mit einer Korngröße im Bereich um 1 µm bis mehrere 10 µm verarbeitet werden.

Darüber hinaus kann das Stoffgemisch weitere chemisch reaktive Füllstoffe, wie z. B. Aluminium (kostengünstig, u. a. zur Bildung von Aluminiumoxid mit dem im Siliconharz enthaltenen Sauerstoff) enthalten. Ebenso kann das Stoffgemisch wenigstens einen Inertfüllstoff enthalten, der in Pulverform oder auch als Faser, insbesondere als Kurzfaser verarbeitet werden kann. Dies dient der Verbesserung der Werkstoffermüdungs- und Verschleißbeständigkeit. Insbesondere können Zirkonoxid und/oder Aluminiumoxid und/oder Siliziumcarbid und/oder Siliziumnitrid (letzteres begünstigt auch die Keimbildung von Siliziumnitrid im Rahmen der Reaktionspyrolyse in Stickstoffatmosphäre) zur Verbesserung der mechanischen Eigenschaften und/oder der Reaktionskinetik feinverteilt beigegeben werden. Durch geeignete Wahl der Füllstoffkombination und Pyrolysebedingungen (Temperaturregelung und Drucksteuerung, z. B. Stickstoff-Atmosphäre) lassen sich u. a. das Schwindungsverhalten, die mechanischen und die elektrischen Eigenschaften (speziell mit dem Ziel einer möglichst geringen Leitfähigkeit der hergestellten Lagerkomponenten) der polymerabgeleiteten Keramik sehr effizient weiter optimieren. Dies gilt ebenfalls für weitere Werkstoffkennwerte des Endprodukts, wie den thermischen Ausdehnungskoeffizienten oder die Wärmeleitfähigkeit sowie für die magnetischen Eigenschaften. In diese Materialoptimierung kann auch die chemische Zusammensetzung der verwendeten metallorganischen Verbindung einbezogen werden.

Die Anmischung des Stoffgemisches, je nach Form des Polysilsesquioxans (flüssig mit unterschiedlicher Viskosität, Feststoffharz) und Volumenanteil des Füllstoffs (typischerweise im Bereich um 30 % bis 50 %) z. B. in eine Suspension, Lösungsmitteldispergierung, Warmflüssig- oder Trockenmischung, kann etwa durch Kneten, Rühren, Intensivmischen o. ä. erfolgen. Dabei ist besonders auf Homogenität der Mischung zu achten. Je nach Form des Stoffgemisches kann sich als Nachbereitung eine Entgasung, Trocknung bzw. Extrusion und Granulierung anschließen.

Die Reaktionspyrolyse kann wenigstens teilweise in einer chemisch reaktiven Gasatmosphäre durchgeführt werden, wobei sich speziell eine Stickstoffatmosphäre eignet. Durch die Gasatmosphäre werden weitere Reaktionspartner zur Verfügung gestellt, insbesondere mit dem Ziel der Herstellung von Keramikmaterial auf Nitridbasis, bevorzugt Siliziumnitrid. Im Sinne einer möglichst effizient ablaufenden Reaktion ist es dabei vorteilhaft, wenn die Reaktionspyrolyse unter Überdruck von typischerweise einigen bar bis etwa 50 bar (möglich sind allerdings Atmosphärendrücke von einigen 100 bar) durchgeführt wird. Insbesondere kann der Prozess, beispielsweise orientiert an optimalen Nitridierungsverhältnissen und der Ausnutzung des jeweiligen Porositätszustands, unter Variierung des Drucks im genannten Überdruckbereich erfolgen. Im Interesse eines wirtschaftlichen und (sicherheits-) technisch weniger aufwendigen Prozesses wird bevorzugt ein Druck von etwa 50 bar möglichst nicht überschritten. Alternativ oder zusätzlich kann die Reaktionspyroloyse auch wenigstens teilweise in einer chemisch inerten Gasatmosphäre oder im Vakuum durchgeführt werden.

Die Endtemperatur der Pyrolyse, die typischerweise über einige Stunden eingehalten wird, liegt zwischen 1000 °C und 1700 °C, bevorzugt zwischen 1200 °C und 1500 °C. Aus wirtschaftlichen Erwägungen ist es wegen der einfacheren Ofentechnik grundsätzlich vorzuziehen, eine Temperatur von 1400 °C bis 1500 °C möglichst nicht zu überschreiten. Auch hier kann, z. B. wegen Bereichen vorübergehender offener Porosität und u. a. mit dem Ziel eines möglichst weitreichenden Austreibens von Sauerstoff (falls dies, abhängig auch von der eingesetzten Füllstoffkombination, gewünscht ist), ein temperaturgesteuertes mehrstufiges Verfahren gewählt werden, d. h. die Temperatur kann variiert werden. Vorab kann eine Wärmebehandlung etwa im Bereich von 400 °C bis 1000 °C mit Haltezeiten in der Größenordnung 1 Stunde durchgeführt werden, speziell um dabei Temperaturfenster offenen Porosität hinsichtlich der Reaktionsfähigkeit mit reaktiven Atmosphären-Gas (bevorzugt Stickstoff) auszunützen. Die beschriebene Vorgehensweise hat den Vorteil, dass ein qualitativ besonders hochwertiges, beispielsweise praktisch restpolymerfreies Keramikmaterial erzeugt wird. Es liegt in Form eines mikroskopisch strukturierten keramischen Werkstoffes, gegebenenfalls mit geringem metallischem Anteil vor und Siliziumnitrid und Carbid. Je nach Wahl der Reaktionspartner und Prozessbedingungen kann sauerstoffhaltiges oder sauerstofffreies keramisches Material hergestellt werden bzw. ein geringer Anteil an Restpolymer im Verbundwerkstoff erhalten bleiben. An die Reaktionspyrolyse kann sich ein konventionelles Nachsintern anschließen.

Vor der Reaktionspyrolyse kann eine erste, bereits grob am Lagerbauteil orientierte Formgebung des Stoffgemisches, z. B. durch Pressen oder Gießen, und anschließend eine Härtung der im Stoffgemisch enthaltenen metallorganischen Verbindung durchgeführt werden. Diese Stabilisierung zum möglichst porenfreien Grünbauteil kann mit oder ohne Gewichtsverlust erfolgen und insbesondere unter Druck und durch Wärmezufuhr bei einer Temperatur von etwa 100 °C bis 300.°C durchgeführt werden. Alternativ dazu oder ergänzend kann die Härtung auch durch Strahlungseinwirkung vollzogen sowie durch Zusätze gefördert werden. Im Rahmen der Härtung kann aus dem Stoffgemisch ein formstabiles Halbzeug hergestellt werden, aus dem vor Durchführung der Reaktionspyrolyse durch mechanische Bearbeitung die Lagerbauteile in ihren Abmessungen endzustandsnah gefertigt werden. Dies hat den Vorteil, dass die zur Herstellung der Lagerbauteile erforderliche mechanische Bearbeitung größtenteils mit konventionellen industrieüblichen Verfahren, z. B. spanabhebend mit geringem Werkzeugverschleiß, an dem relativ weichen Grünbauteil stattfindet und nicht an dem harten, spröden Keramikprodukt. Dies erleichtert die Bearbeitung wesentlich, so dass eine effiziente und kostengünstige Fertigung möglich ist.

Die Bestandteile des Stoffgemisches können so aufeinander abgestimmt werden, dass die Lagerbauteile bei der Durchführung der Reaktionspyrolyse keiner nennenswerten Schwindung ausgesetzt sind oder eine kontrollierte, maßgeschneidert an der abschließenden Feinbearbeitung orientierte, geringe Volumenänderung erfahren. Dies hat den Vorteil, dass das vernetzte Grünbauteil nahezu bis auf Endmaß bearbeitet werden kann. Nach der Durchführung der Reaktionspyrolyse kann dann eine mechanische Feinbearbeitung (z. B. Schleifen, Honen, Läppen) der keramisierten Lagerbauteile erfolgen. Dabei ist aber nur noch ein relativ geringer Materialabtrag erforderlich. Insbesondere bei der Herstellung einfacher Formkörper, wie beispielsweise aus Stangen oder Stäben gefertigte Rollen und Kugeln für Wälzlager, können auch kontrolliert größere Schwindungen oder auch eine Volumenausdehnung auf ein gewünschtes Zielmaß vorgesehen werden. Zur Verbesserung der mechanischen Eigenschaften kann das keramische Produkt vor oder nach der mechanischen Feinbearbeitung kugelgestrahlt werden, wodurch risshemmende Druckeigenspannungen im Randbereich eingebracht werden.

Zur Herstellung von Lagerbauteilen auf Siliziumnitridbasis eignen sich prinzipiell auch Polysilazane als siliziumorganische Vorstufe. Ihr Einsatz ist allerdings im Vergleich zu Siliconharzen mit höheren Kosten für das Ausgangsmaterial und einer aufwendigeren Weiterverarbeitung (z. B. Feuchteempfindlichkeit) verbunden.

Zur Darstellung von Lagerbauteilen auf Siliziumcarbidbasis aus siliziumorganischen Vorstufen wird die Reaktionspyrolyse bevorzugt unter Schutzgas (Inertgasatmosphäre, z. B. Argon) oder im Vakuum durchgeführt. Es können Polysilane oder Polycarbosilane als siliziumorganische Vorstufen verwendet werden, die aber wiederum zu deutlich höheren Kosten führen. Deshalb sind auch in diesem Fall aus wirtschaftlichen Gründen vernetzende Silicone, Siliconharze oder Polysilsesquioxane, vorzuziehen.

Es ist somit möglich, mit dem erfindungsgemäßen Verfahren keramische Lagerbauteile für Standardanwendungen sowie für Spezialanwendungen mit dann auch an die entsprechenden besonderen Forderungen angepassten und gegebenenfalls beispielsweise in bestimmten mechanischen Kennwerten gezielt modifizierten Materialeigenschaften herzustellen.

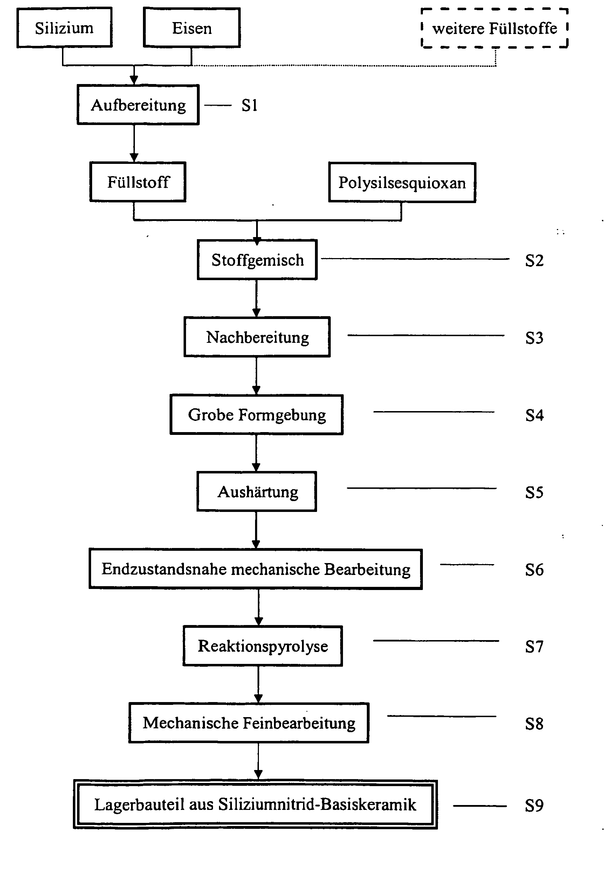

Die Erfindung wird nachstehend anhand des in der Zeichnung dargestellten Ausführungsbeispiels näher erläutert.

Die einzige Figur zeigt ein schematisches Flussdiagramm zur Veranschaulichung des erfindungsgemäßen Verfahrensablaufs.

Zur Fertigung von Lagerbauteilen nach dem erfindungsgemäßen Verfahren wird in einem ersten Schritt S1 eine geeignete Füllstoffzubereitung hergestellt, die als chemisch reaktiven Anteil eine Mischung im Atomverhältnis Silizium zu Metall von insgesamt nahe 2:1, oder eher zugunsten von Silizium verschoben, enthält. Weitere chemisch reaktive oder inerte Füllstoffe können ebenfalls hinzugefügt werden. Wie ihr Volumenanteil ist auch eine kleine Korngröße speziell der chemisch reaktiven Komponenten für die Kontrolle und Minimierung der bei der pyrolytischen Polymer-Keramik-Umsetzung auftretenden, mit der Dichtezunahme verbundenen Schwindung wesentlich. Deshalb wird der chemisch reaktive Füllstoff in Pulverform mit Korngrößen um 1 µm bis mehrere 10 µm verwendet, während der inerte Füllstoff (z. B. Bornitrid, Siliziumnitrid, letzteres speziell zur Verbesserung der Reaktionskinetik bei der Bildung von Siliziumnitrid) auch als gröberes Pulver vorliegen kann. Die Aufbereitung des Füllstoffs kann etwa Prozessschritte wie Reinigung, Mischung, Mahlen (z. B. mit Erzeugung einer Vormischung aus Füllstoffpulver mit etwas metallorganischer Vorstufe), Sieben, Beschichtung (z. B. Silan, Polymervorstufe: etwa mittels Fällungstechniken, speziell zur Aufnahme höherer Volumenanteile an Füllstoff) und Vorlösung umfassen. Schließlich können, insbesondere zur Verbesserung der mechanischen Eigenschaften (hier speziell Risswiderstand, Risszähigkeit, Ermüdungsbeständigkeit, Verschleißwiderstand, Härte) des keramischen

Endprodukts, feinverteiltes Zirkonoxid und/oder Aluminiumoxid und/oder Siliziumcarbid zugegeben sowie Fasern eingesetzt werden, wobei sich Kurzfasern auch wegen der damit verbundenen geringeren Kosten bevorzugt eignen. Der elektrische Widerstand lässt sich ebenfalls über eine geeignete Auswahl der Füllstoffkombination und der Zusammensetzung des verwendeten Polymers (z. B. Kohlenstoff- und Sauerstoffgehalt) einstellen, da die Leitfähigkeit mit geringerem Kohlenstoff- bzw. Karbidanteil in der erzeugten Keramik abnimmt. Ähnlich können die weiteren Werkstoffeigenschaften, wie der thermische Ausdehnungskoeffizient, die Wärmeleitfähigkeit, der Elastizitätsmodul oder das magnetische Verhalten, beeinflusst werden.

In einem zweiten Schritt S2 wird aus dem so vorbereiteten Füllstoff und mindestens einer flüssigen oder festen metallorganischen Verbindung als präkeramischer Vorstufe ein Stoffgemisch hergestellt. Als metallorganische Verbindung eignen sich insbesondere vernetzende siliziumorganische Verbindungen, wobei in dem im folgenden weiter beschriebenen Ausführungsbeispiel als bevorzugtes Polysiloxan ein Polysilsesquioxan (z. B. Methylpolysilsesquioxan, Vinylmethylphenylwasserstoffpolysilsesquioxan) zum Einsatz kommt. Die Anmischung des Stoffgemisches, je nach Form des Polysilsesquioxans (flüssig mit unterschiedlicher Viskosität oder fest) und Volumenanteil des Füllstoff (typischerweise um 30 % bis 50 %) z. B. in eine Suspension, Lösungsmitteldispergierung, Warmflüssig- oder Trockenmischung, kann etwa durch Kneten, Rühren, Intensivmischen o. ä. erfolgen, wobei sich je nach Form des Stoffgemisches in Schritt S3 als Nachbereitung eine Entgasung, Trocknung bzw. Extrusion und Granulierung anschließen kann. Auf Homogenität der Mischung ist besonders zu achten.

In einem auf Schritt S3 folgenden Schritt S4 wird das Stoffgemisch einer bereits grob an der Kontur des herzustellenden Lagerbauteils orientierten Formgebung unterzogen. Dies kann etwa durch Gießen (z. B. drucklos, Heißguss, Spritzguss) oder Pressen erfolgen. Dabei ist auf Homogenität und kompakte Ausfüllung der gewählten Form zu achten. Wenn beispielsweise rollenförmige Wälzkörper hergestellt werden sollen, so eignet sich eine Form, mit der ein Rundstab geformt werden kann. Die Form kann aber auch so ausgebildet sein, dass das Stoffgemisch zu einem Rohr geformt wird, aus dem Ringe für Wälzlager oder für Gleitlager hergestellt werden. Im Prinzip lassen sich alle gängigen Formen von Lagerbauteilen, wie beispielsweise Wälzkörpern oder Lagerringen bzw. von Halbzeugen zur Herstellung von Lagerbauteilen realisieren.

An Schritt S4 schließt sich ein Schritt S5 an, in dem das Stoffgemisch in der Form unter Ausnutzung der Vernetzungsmechanismen des verwendeten Polysilsesquioxans (z. B. Additions- oder Kondensationsvemetzung) zu einem sogenannten Grünbauteil ausgehärtet wird. Dies geschieht in der Regel wärmeinduziert bei einer Temperatur von ca. 100 °C bis 300 °C, wobei zusätzliche Druckeinwirkung (z. B. Warmpressen bei einigen 100 bar) vorliegen kann. Alternativ dazu kann die Vernetzung prinzipiell auch durch eine Bestrahlung bei Raumtemperatur sowie mit Hilfe von Zusätzen vollzogen werden. Die Bestrahlung kann auch ergänzend zur thermisch induzierten Vernetzung eingesetzt werden. In diesem Fall findet die Bestrahlung oberhalb Raumtemperatur statt.

Das Grünbauteil ist formstabil, aber noch vergleichsweise weich, so dass es sich leicht mechanisch bearbeiten lässt. Die endzustandsnahe mechanische Bearbeitung findet in einem Schritt S6 statt, der auf Schritt S5 folgt. Beispielsweise durch eine spanende Bearbeitung können bei geringem Werkzeugverschleiß aus dem Grünbauteil ein oder mehrere Wälzlagerbauteile hergestellt werden, wobei im Hinblick auf die gewünschten Endmaße nur ein geringer Zuschlag für eine abschließende Feinbearbeitung erforderlich ist. So können zur Herstellung von Zylinderrollen aus einem Rundstab einzelne Abschnitte abgestochen werden und durch Drehen und/oder Schleifen auf gewünschte Grobabmessungen der Zylinderrolle gebracht werden. Die Feinbearbeitung (z. B. Schleifen, Honen, Läppen), mit der die Endmaße und die gewünschte Oberflächentopographie hergestellt werden, erfolgt zu einem späteren Zeitpunkt des Verfahrens.

Wenn die Grobbearbeitung des Grünbauteils abgeschlossen ist, wird es in einem Schritt S7 einer Reaktionspyrolyse unterzogen, durch die das vernetzte Stoffgemisch des mechanisch bearbeiteten Grünbauteils in eine Keramik umgewandelt wird (Keramisierung). Die Reaktionspyrolyse (Thermolyse) wird im bevorzugten Ausführungsbeispiel druckgesteuert in einer Stickstoffatmosphäre durchgeführt, wobei für die einzelnen Schritte jeweils ein Stickstoffüberdruck üblicherweise im Bereich einiger bar bis ungefähr 50 bar (höhere Drücke sind möglich, doch wird das Verfahren dadurch weniger wirtschaftlich) gewählt wird. Die Temperatur beträgt während der ab etwa 400 °C einsetzenden Reaktionspyrolyse nach einem oder mehreren möglichen Zwischenschritten im Bereich um ca. 600 °C mit insgesamt etwa 1 Stunde Haltezeit, bei denen Stickstoffüberdruck zur Ausnutzung vorübergehender offener Porosität für dir Reaktion mit dem chemisch reaktiven Füllstoff besonders wichtig ist, typischerweise 1500 °C über beispielsweise 6 Stunden, wobei hier ebenfalls ein temperaturgesteuerter Prozess in mehreren Schritten möglich ist. Prinzipiell können auch niedrigere Temperaturen von beispielsweise 1000 °C gewählt werden. Dann ist aber damit zu rechnen, dass noch ein gewisser, mit sinkender Temperatur zunehmender Anteil an Restpolymer in dem derart herstellten Keramikmaterial vorhanden ist. Zur Herstellung einer qualitativ hochwertigen Keramik sind in der Regel Temperaturen zwischen 1200 °C und 1500 °C erforderlich. Es sind aber auch höhere Temperaturen bis ca. 1700 °C möglich, so dass insgesamt ein Temperaturbereich von ca. 1000 °C bis 1700 °C für den ein- oder mehrstufigen Prozess in Frage kommt (aus wirtschaftlichen Gründen sind Temperaturen nicht über ca. 1400 °C bis 1500 °C grundsätzlich vorzuziehen). Unter den geschilderten Reaktionsbedingungen wird das vernetzte Grünbauteil zu einem keramischen Material auf der Basis von Siliziumnitrid umgewandelt und der in der organische Vorstufe enthaltene Sauerstoff weitgehend ausgetrieben. Das so hergestellte keramische Produkt weist eine mikroskopische Strukturierung und nur geringe Porosität, typischerweise in der Größenordnung maximal weniger Prozent, auf, die zudem geschlossen und sehr fein verteilt ist. Neben dem Hauptanteil Siliziumnitrid enthält der erzeugte keramische Verbundwerkstoff vorwiegend Carbide sowie eine geringe Menge an Restsauerstoff, der insbesondere oxidisch gebunden ist, und an metallischen Komponenten. Je nach verwendeter Füllstoffkombination (z. B. Oxide wie Aluminium- und Zirkonoxid; auch z. B. Aluminium als chemisch reaktive Füllerkomponente zur Bildung von Aluminiumoxid mit dem im Polymer enthaltenen Sauerstoff) und Prozessführung können auch Keramiken mit höherem Sauerstoffgehalt gezielt und materialoptimiert hergestellt werden.

Im Rahmen der Reaktionspyrolyse reagieren die Komponenten des Stoffgemisches bzw. die Zersetzungsfragmente der Polymermatrix sowohl untereinander als auch mit der umgebenden Stickstoffatmosphäre. Dadurch ist es möglich, die mit der Dichtezunahme und dem (Kohlen-) Wasserstoffentzug der Polymere des vernetzten Stoffgemisches verbundene Schwindung durch eine entsprechende Volumenzunahme insbesondere durch mit Expansion verbundene chemische Reaktionen des Füllstoffs zu kompensieren, so dass letztendlich das Gesamtvolumen nahezu unverändert bleibt. Allerdings können speziell bei der Herstellung einfacher Formkörper, wie im beschriebenen Ausführungsbeispiel Wälzkörper, wegen der günstigen Geometrie zur Verfahrensvereinfachung auch kontrolliert größere Schrumpfungen auf ein gewünschtes Zielmaß zugelassen werden. Wesentlich für eine (nahezu) schwindungsfreie Bauteilkeramisierung ist insbesondere ein hinreichend großes Verhältnis zwischen Oberfläche und Volumen des chemisch reaktiven Füllstoffpulvers, weshalb die verwendete Korngröße im Bereich um 1 µm bis mehrere 10 µm liegt. In diesem Zusammenhang können zur Optimierung des Verfahrens weitere chemisch reaktive Füllstoffe, .wie beispielsweise Aluminium, Bor oder Chrom, und darüber hinaus auch chemisch inerte Füllstoffe, wie etwa Siliziumnitrid oder Bornitrid, eingesetzt werden. Dabei können Inertfüllstoffpulver mit größerer Korngröße und/oder Fasern (speziell Kurzfasern) sowie feinverteiltes Zirkonoxid, Aluminiumoxid und/oder Siliziumcarbid eingebracht werden. Die Wahl geeigneter Füllstoffkombinationen, Polymerzusammensetzungen und Pyrolysebedingungen (Druck- und Temperaturregelung) erlaubt eine sehr effiziente Werkstoffoptimierung (z. B. Ermüdungs- und Verschleißverhalten, mechanische Kennwerte, elektrische Leitfähigkeit, thermischer Ausdehnungskoeffizient, Wärmeleitfähigkeit). Nach der Reaktionspyrolyse kann sich ein konventionelles Nachsintern zur weiteren Verbesserung der Materialeigenschaften anschließen.

Zur Herstellung der endgültigen Form des Lagerbauteils schließt sich an Schritt S7 ein Schritt S8 an, in dem eine mechanische Feinbearbeitung der Oberfläche des Keramikkörpers etwa mit Diamantwerkzeug erfolgt, so dass in einem Schritt S9 als Endprodukt das Lagerbauteil vorliegt, wie zuvor geschildert im bevorzugten Ausführungsbeispiel bestehend aus einer Keramik basierend auf Siliziumnitrid. Bei der Feinbearbeitung kann es sich beispielsweise um Schleif-, Hon- und/oder Läppprozesse handeln, bei denen die Abmessungen des Lagerbauteils auf die gewünschten Endwerte gebracht werden und/oder die gewünschte Oberflächentopographie (speziell Rauhigkeit), insbesondere im Bereich der Wälz- bzw. Gleitflächen hergestellt wird. Zur Verbesserung der mechanischen Eigenschaften kann das keramisierte Lagerbauteil auch kugelgestrahlt werden, wodurch risshemmende Druckeigenspannungen im Randbereich eingebracht werden. Dies kann vor oder nach der mechanischen Feinbearbeitung erfolgen.

## Patentansprüche

1. Verfahren zur Herstellung keramische Lagerbauteile, **dadurch gekennzeichnet, dass**
- ein Stoffgemisch aus einer metallorganischen Verbindung als präkeramische Vorstufe sowie aus Silizium in Form einer Legierung, die kein Metallsilizid ist, als chemisch reaktiven Füllstoff hergestellt wird und
- das Stoffgemisch einer Reaktionspyrolyse unterzogen und **dadurch** in keramisches Material überführt wird.

2. Verfahren nach Anspruch 1, **dadurch gekennzeichnet, dass** das Stoffgemisch eine vernetzende metallorganische Verbindung als präkeramische Vorstufe enthält.

3. Verfahren nach einem der vorhergehenden Ansprüche, **dadurch gekennzeichnet, dass** das Stoffgemisch eine siliziumorganische Verbindung als präkeramische Vorstufe enthält.

4. Verfahren nach einem der vorhergehenden Ansprüche, **dadurch gekennzeichnet, dass** das Stoffgemisch einen Inertfüllstoff enthält.

5. Verfahren nach einem der vorhergehenden Ansprüche, **dadurch gekennzeichnet, dass** das Stoffgemisch Zirkonoxid und/oder Aluminiumoxid und/oder Siliziumcarbid und/oder Siliziumnitrid zur Verbesserung der mechanischen Eigenschaften und/oder der Reaktionskinetik enthält.

6. Verfahren nach einem der vorhergehenden Ansprüche, **dadurch gekennzeichnet, dass** die Reaktionspyrolyse wenigstens teilweise in einer chemisch reaktiven Gasatmosphäre durchgeführt wird.

7. Verfahren nach Anspruch 6, **dadurch gekennzeichnet, dass** die Reaktionspyrolyse in einer Stickstoffatmosphäre durchgeführt wird.

8. Verfahren nach einem der vorhergehenden Ansprüche, **dadurch gekennzeichnet, dass** die Reaktionspyrolyse wenigstens teilweise in einer chemisch inerten Gasatmosphäre oder im Vakuum durchgeführt wird.

9. Verfahren nach einem der vorhergehenden Ansprüche, **dadurch gekennzeichnet, dass** die Reaktionspyrolyse unter Überdruck durchgeführt wird.

10. Verfahren nach einem der vorhergehenden Ansprüchen, **dadurch gekennzeichnet, dass** während der Reaktionspyrolyse der Druck variiert wird.

11. Verfahren nach einem der vorhergehenden Ansprüche, **dadurch gekennzeichnet, dass** die Reaktionspyrolyse bei einer Temperatur zwischen 1000 °C und 1700 °C durchgeführt wird und während der Reaktionspyrolyse die Temperatur variiert wird.

12. Verfahren nach einem der vorhergehenden Ansprüche, **dadurch gekennzeichnet, dass** im Rahmen der Reaktionspyrolyse vorab wenigstens eine Wärmebehandlung im Bereich von 400 °C bis 1000 °C durchgeführt wird.

13. Verfahren nach einem der vorhergehenden Ansprüche, **dadurch gekennzeichnet, dass** vor der Reaktionspyrolyse eine grob am Lagerbauteil orientierte Formgebung des Stoffgemisches und eine Stabilisierung durch Aushärtung der metallorganischen Vorstufe im Stoffgemisch durchgeführt wird.

14. Verfahren nach Ansprch 13, **dadurch gekennzeichnet, dass** im Rahmen der Aushärtung aus dem Stoffgemisch ein formstabiles Halbzeug hergestellt wird, aus dem vor Durchführung der Reaktionspyrolyse durch mechanische Bearbeitung die Lagerbauteile endzustandsnah gefertigt werden.

15. Verfahren nach einem der vorhergehenden Ansprüche, **dadurch gekennzeichnet, dass** nach Durchführung der Reaktionspyrolyse, mit oder ohne Nachsintern und vor oder nach der mechanischen Feinbearbeitung, ein Kugelstrahlen der keramisierten Lagerbauteile erfolgt.

## Claims

1. Process for producing ceramic bearing components, **characterized in that**
- a substance mixture of an organometallic compound as preceramic precursor and of silicon in the form of an alloy, which is not a metal silicide, as a chemically reactive filler is produced, and
- the substance mixture is subjected to a reaction pyrolysis and is thereby converted into ceramic material.

2. Process according to Claim 1, **characterized in that** the substance mixture contains a crosslinking organometallic compound as preceramic precursor.

3. Process according to either of the preceding claims, **characterized in that** the substance mixture contains an organosilicon compound as preceramic precursor.

4. Process according to one of the preceding claims, **characterized in that** the substance mixture contains an inert filler.

5. Process according to one of the preceding claims, **characterized in that** the substance mixture contains zirconium oxide and/or aluminium oxide and/or silicon carbide and/or silicon nitride in order to improve the mechanical properties and/or the reaction kinetics.

6. Process according to one of the preceding claims, **characterized in that** the reaction pyrolysis is carried out at least partially in a chemically reactive gas atmosphere.

7. Process according to Claim 6, **characterized in that** the reaction pyrolysis is carried out in a nitrogen atmosphere.

8. Process according to one of the preceding claims, **characterized in that** the reaction pyrolysis is carried out at least partially in a chemically inert gas atmosphere or in vacuo.

9. Process according to one of the preceding claims, **characterized in that** the reaction pyrolysis is carried out under an excess pressure.

10. Process according to one of the preceding claims, **characterized in that** the pressure is varied during the reaction pyrolysis.

11. Process according to one of the preceding claims, **characterized in that** the reaction pyrolysis is carried out at a temperature between 1000°C and 1700°C and the temperature is varied during the reaction pyrolysis.

12. Process according to one of the preceding claims, **characterized in that** at least one heat treatment in the range of 400°C to 1000°C is carried out in advance as part of the reaction pyrolysis.

13. Process according to one of the preceding claims, **characterized in that** the reaction pyrolysis is preceded by shaping of the substance mixture in a manner oriented roughly to the bearing component, and by stabilization by hardening the organometallic precursor in the substance mixture.

14. Process according to Claim 13, **characterized in that** a dimensionally stable semi-finished product is produced from the substance mixture as part of the hardening, and the bearing components are produced almost to their final condition from said semi-finished product by mechanical processing before the reaction pyrolysis is carried out.

15. Process according to one of the preceding claims, **characterized in that** the ceramicized bearing components are subjected to shot peening after the reaction pyrolysis has been carried out, with or without subsequent sintering, and before or after the mechanical precision processing.

## Revendications

1. Procédé pour la production de pièces de palier céramiques, **caractérisé en ce que**
- un mélange de substances constitué par un composé métallo-organique comme précurseur précéramique ainsi que de silicium sous forme d'un alliage, qui n'est pas un siliciure de métal, est préparé comme charge chimiquement réactive et
- le mélange de substances est soumis à une pyrolyse de réaction et ainsi transformé en matériau céramique.

2. Procédé selon la revendication 1, **caractérisé en ce que** le mélange de substances contient un composé métallo-organique de réticulation comme précurseur précéramique.

3. Procédé selon l'une quelconque des revendications précédentes, **caractérisé en ce que** le mélange de substances contient un composé organosilicié comme précurseur précéramique.

4. Procédé selon l'une quelconque des revendications précédentes, **caractérisé en ce que** le mélange de substances contient une charge inerte.

5. Procédé selon l'une quelconque des revendications précédentes, **caractérisé en ce que** le mélange de substances contient de l'oxyde de zirconium et/ou de l'oxyde d'aluminium et/ou du carbure de silicium et/ou du nitrure de silicium pour améliorer les propriétés mécaniques et/ou la cinétique de réaction.

6. Procédé selon l'une quelconque des revendications précédentes, **caractérisé en ce que** la pyrolyse de réaction est réalisée au moins partiellement dans une atmosphère de gaz chimiquement réactif.

7. Procédé selon la revendication 6, **caractérisé en ce que** la pyrolyse de réaction est réalisée dans une atmosphère d'azote.

8. Procédé selon l'une quelconque des revendications précédentes, **caractérisé en ce que** la pyrolyse de réaction est réalisée au moins partiellement dans une atmosphère de gaz chimiquement inerte ou sous vide.

9. Procédé selon l'une quelconque des revendications précédentes, **caractérisé en ce que** la pyrolyse de réaction est réalisée sous une surpression.

10. Procédé selon l'une quelconque des revendications précédentes, **caractérisé en ce que** la pression est variée pendant la pyrolyse de réaction.

11. Procédé selon l'une quelconque des revendications précédentes, **caractérisé en ce que** la pyrolyse de réaction est réalisée à une température entre 1000°C et 1700°C et la température est variée pendant la pyrolyse de réaction.

12. Procédé selon l'une quelconque des revendications précédentes, **caractérisé en ce que**, dans le cadre de la pyrolyse de réaction, on réalise au préalable au moins un traitement thermique dans la plage de 400°C à 1000°C.

13. Procédé selon l'une quelconque des revendications précédentes, **caractérisé en ce qu'**on réalise, avant la pyrolyse de réaction, un façonnage grossier, orienté vers la pièce de palier, du mélange de substances et une stabilisation par durcissement du précurseur métallo-organique dans le mélange de substances.

14. Procédé selon la revendication 13, **caractérisé en ce que** dans le cadre du durcissement, on prépare à partir du mélange de substances un produit semi-fini de forme stable, à partir duquel les pièces de palier sont fabriquées par un usinage mécanique dans un état proche de l'état final avant la réalisation de la pyrolyse de réaction.

15. Procédé selon l'une quelconque des revendications précédentes, **caractérisé en ce qu'**on réalise, après la réalisation de la pyrolyse de réaction, avec ou sans post-frittage, et avant ou après l'usinage mécanique fin, un grenaillage des pièces de palier céramisées.
